# EUROPEAN PATENT APPLICATION

(11) **EP 1 906 667 A2**
(43) Date of publication of application: **02.04.2008**
(21) Application number: 07105332.6
(22) Date of filing: 30.03.2007
(51) Int. Cl.: H04N 7/16

(54) **Handling applications received by data broadcast**

(30) Priority: 29.09.2006 KR 20060096398
(71) Applicant: Samsung Electronics Co., Ltd., Suwon-si, Gyeonggi-Do (KR)
(72) Inventor: Koh, Kwang-hyun, Seoul (KR); Lee, Jong-ho, Seoul (KR); Kim, Kwang-hyuk, Gyeonggi-do (KR)
(74) Representative: Walaski, Jan Filip

(57) **Abstract**

Provided are a method and apparatus for receiving, storing, and executing a data broadcast application. The apparatus includes an application controller that determines whether receiving of application data needed to execute an application is completed before storing of a data broadcast is completed, allows the received application data to be stored when receiving of the application is completed, and determines whether the application will be executed together with audio/video data when the stored data broadcast is reproduced; and a storage unit that stores the completely received application data together with the audio/video data. Accordingly, it is possible to prevent the occurrence of errors in executing an application.

## Description

The present invention relates to handling applications received by data broadcast.

Advances in digital television (TV) broadcasting technology have lead to the development of standards for data broadcasting whereby a large amount of additional information is delivered to television (TV) viewers via a TV and T-commerce is established. Examples of international standards for data broadcasting include Application Configuration Access Protocol (ACAP) prescribed by the Advanced Television Systems Committee (ATSC), Multimedia Home PlatForm (MHP) of Digital Video Broadcasting (DVB), Open Cable Application Platform (OACP), etc.

In particular, data transmission methods for data broadcasting, such as data streaming, data piping, and a carousel method, have been introduced. In the carousel method, modules are periodically transmitted. Specifically, in a data carousel method, modules, which are basic data units, are repeatedly transmitted in order to make them available to users. In an object carousel method, a group of constructed objects are easily delivered from a broadcast server to a user using a directory object, a file object, a stream object, or the like. In the carousel method a block transmitted in the form of a DownloadDataBlock (DDB) defined in the Digital Storage Media Command and Control (DSM-CC) specification, is used as the basic transport unit, and several blocks constitute a module. Video clips, images, and text files, which are used in an application program provided to a user, are transmitted in the form of a module.

As described above, each module contains at least one piece of application data and/or code which can be executed in a client. Thus, the client must collect all modules or all files/directories belonging to an application in order to execute the application.

However, a conventional data receiving apparatus is not capable of determining whether all application data needed to execute a received and stored application is collected. Thus, when all the needed application data is not present and a consumer desires to execute the application, the application cannot be executed, execution of the application is suddenly stopped, or an execution error message is generated.

In one form, the present invention is capable of preventing an error in executing an application by determining whether all application data needed to execute the application is received by tracking an object carousel tree or by using module collection information of an object carousel tree.

According to an aspect of the present invention, there is provided an apparatus for receiving and storing a data broadcast application, the apparatus comprising an application controller determining whether receiving of application data needed to execute an application is completed when a data broadcast is stored, and allowing the received application data to be stored when it is determined that receiving of the application data is completed; and a storage unit storing the application data, which is completely received, together with audio/video data.

The application controller's determination of whether receiving of the application is completed may be performed by searching a tree structure of an object carousel constructed from the data broadcast, and determining whether an object is received. The application controller's determination of whether receiving of the application is completed may be performed by determining whether all modules described in a control message are received. The control message may be download information indications extracted from a program map table of the data broadcast.

When a plurality of pieces of application data for a plurality of applications are transmitted, the application controller may determine as to whether receiving of application data to be executed for each application is completed.

The tree structure of the object carousel may be constructed using a service gateway as a root directory, wherein the service gateway is collected based on an interoperable object reference of a service gateway included in download server indications of the data broadcast.

According to another aspect of the present invention, there is provided an apparatus for executing a data broadcast application, the apparatus comprising a storage unit storing application data, which is needed to execute an application, together with audio/video data when a data broadcast is stored; an application controller determining whether the application is to be executed together with the audio/video data when the stored data broadcast is reproduced; and an application executing unit selectively executing the application in response to an instruction from the application controller.

When a plurality of pieces of application data for a plurality of applications are stored, the application controller may determine whether each of the applications is to be executed.

The application controller may not allow the application to be executed when not all of the application data are received before storing of the data broadcast is completed.

The determining of whether receiving of the application data is completed may be performed by determining whether all modules described in a control message are received. The determining of whether receiving of the application data is completed may be performed by searching a tree structure of an object carousel constructed from the data broadcast and determining whether an object is received. The control message may be download information indications extracted from a program map table of the data broadcast.

The tree structure of the object carousel may be constructed using a service gateway as a root directory, wherein the service gateway is collected based on an interoperable object reference of a service gateway of download server indications of the data broadcast.

According to another aspect of the present invention, there is provided a method of receiving and storing a data broadcast application, the method comprising (a) determining whether receiving of application data needed to execute an application is completed when a data broadcast is stored; and (b) when it is determined that receiving of the application data is completed, storing the received application data.

The method may be performed for each of a plurality of applications when a plurality of pieces of application data for the plurality of applications are transmitted.

(a) may comprise (a1) constructing an object tree using a service gateway as a root directory, wherein the service gateway is collected based on an interoperable object reference of a service gateway included in download server indications of the data broadcast; and (a2) extracting an object included in a module based on the interoperable object reference of the service gateway, and determining whether all objects are received by sequentially searching for lower directories based on the extracted object. Otherwise, (a) may comprise (a1) extracting a control message from a program map table of the data broadcast; and (a2) determining whether all modules described in the control message are received. The control message may be download information indications extracted from the program map table of the data broadcast.

According to another aspect of the present invention, there is provided a method of executing a data broadcast application, the method comprising (a) storing application data, which is needed to execute an application, together with audio/video data when a data broadcast is stored; and (b) executing the application together with the audio/video data when the stored data broadcast is reproduced.

When a plurality of pieces of application data for a plurality of applications are transmitted, determinations may be made as to whether each of the applications is to be executed.

During (b), the application may not be executed when not all of the application is received before the data broadcast is completed.

Whether receiving of the application data is completed may be determined by determining whether all modules described in a control message are received, or by determining by searching a tree structure of an object carousel constructed from the data broadcast and determining whether an object is received.

According to another aspect of the present invention, there is provided a computer readable medium having recorded thereon a computer program for the above methods.

Embodiments of the invention will now be described by way of example with reference to the attached drawings, in which:
Figure 1 is a block diagram of an embodiment of data broadcast receiving apparatus according to the present invention;
Figure 2 illustrates a transport format of a stream transport, and a process of decoding the stream object;
Figure 3A is a conceptual diagram illustrating a process of interpreting a root directory;
Figure 3B is a diagram illustrating an object carousel tree;
Figure 3C is a block diagram of an interoperable object reference (IOR);
Figure 4 is a flowchart illustrating a method of determining whether receiving of an application is completed, according to the present invention; and
Figure 5 is a flowchart illustrating a method of determining whether receiving of an application is completed, according to the present invention.

In the accompanying drawings, like reference numerals denote like elements throughout the specification.

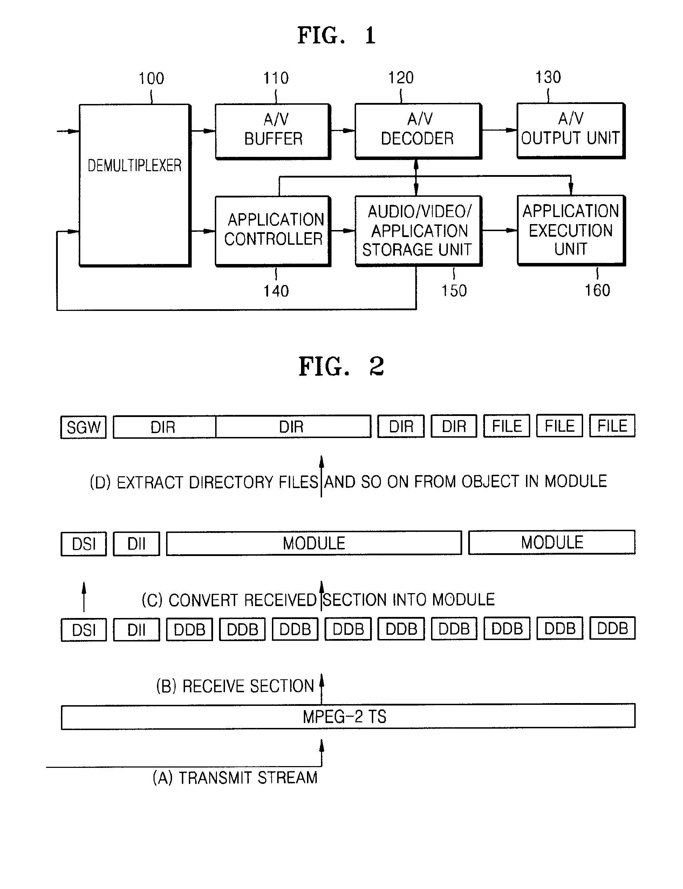

Figure 1 is a block diagram of a data broadcast receiving apparatus according to the present invention. The data broadcast receiving apparatus includes a demultiplexer 100, an audio/video (AV) buffer 110, an AV decoder 120, an AV output unit 130, an application controller 140, an audio/video/application storage unit 150, and an application execution unit 160.

Referring to Figure 1, the demultiplexer 100 demultiplexes a transport stream (TS) into an AV element stream (ES), and the AV buffer 110 stores the ES.

Then, the AV ES is decoded by the AV decoder 120, and reproduced by the AV output unit 130 or stored in the audio/video/application storage unit 150.

The application controller 140 determines whether all application data needed to execute an application is received by tracking an object carousel tree or by using module collection information of a data carousel. The operation of the application controller 140 is described later.

The audio/video/application storage unit 150 stores the ES of the application in response to a control command from the application controller 140. In this embodiment, the audio/video/application storage unit 150 stores only application data that is completely received, thereby preventing errors in executing an application due to the absence of needed data.

The audio/video/application storage unit 150 is non-volatile storage, for instance a HDD. Storage in the audio/video/application storage unit 150 constitutes permanent or semi permanent storage. Prior to storage in the audio/video/application storage unit 150, received data is stored only transiently in memory such as RAM.

The application execution unit 160 determines whether execution of the application is needed when a stored data broadcast is reproduced, in response to a control command from the application controller 140, and executes the application when the data broadcast is reproduced.

Figure 2 illustrates a transport format of a stream object, and a process of decoding the stream object. Referring to Figure 2, in operation (a), an MPEG-2 transport stream constructed in section units is periodically transmitted, and in operation (b), a data broadcast receiver receives the sections of the MPEG-2 transport stream.

Next, in operation (c), the received sections are converted into modules in units of DownloadDataBlocks (DDBs), based on root information obtained from download server indications (DSI).

In the data carousel method, DSI contains information regarding Download Info Indications (DII), but in the object carousel method, DSI obtains information regarding DII via a service gateway (SGW).

Then, in operation (d), application data (a SGW object, a directory object, file objects, etc.) which are needed to execute an application, is extracted from the modules. Since the object carousel method uses a directory structure, a SGW corresponding to a root directory is first interpreted so as to search for a desired directory/file.

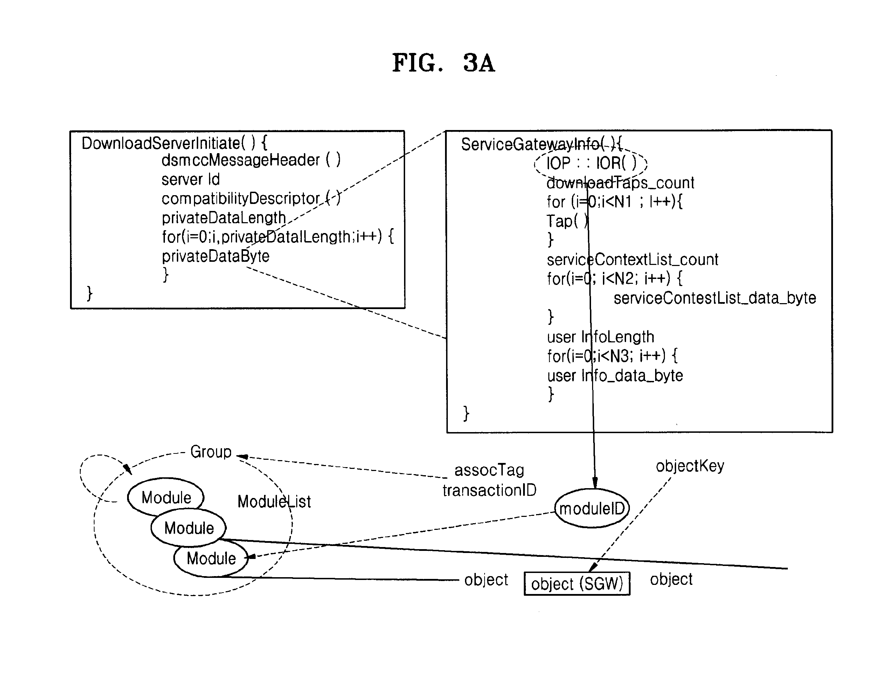

A process of interpreting a root directory will now be described with reference to Figure 3A. As illustrated in Figure 3A, the root directory is designated in DSI. ServiceGatewayinfo(), which contains the location information of an object and tap information, indicates a SGW, i.e., an object including a root. That is, a section head is added to a section of each of Digital Storage Media Command and Control (DSM-CC) transport streams, and each of the DSM-CC transport streams is inserted into a user data region of one of a plurality of transport packets which are transmitted. Here, when a DSM-CC bit stream is inserted into a user data region of a transport packet that is to be transmitted, it is possible to search modules grouped based on the location information of the object and the tab information contained in ServiceGatewayinfo() for a SGW of an object including a root. That is, a root designated based on ServiceGatewayinfo() is searched for, information of a lower directory in the searched root is read, and the object is read by reading lower directory information from interoperable object references (IORs) included in the lower directory.

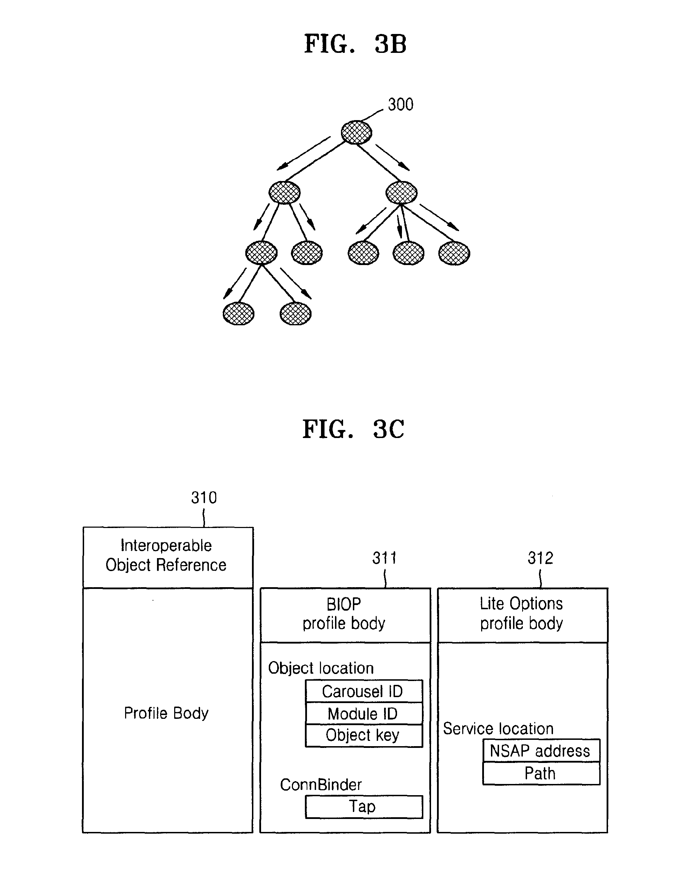

Figure 3B is a diagram illustrating an object carousel tree. As illustrated in Figure 3B, since an object carousel method basically uses a directory structure, an SGW 300 located on the top of the tree is a root directory, and directories or files branch out from the SGW 300.

Figure 3C is a block diagram of an IOR 310. A profile body of the IOR 310 includes a BIOP profile body 311 and a lite options profile body 312. The BIOP profile body 311 includes location information (carousel ID, module ID, an object key, etc.) of an object.

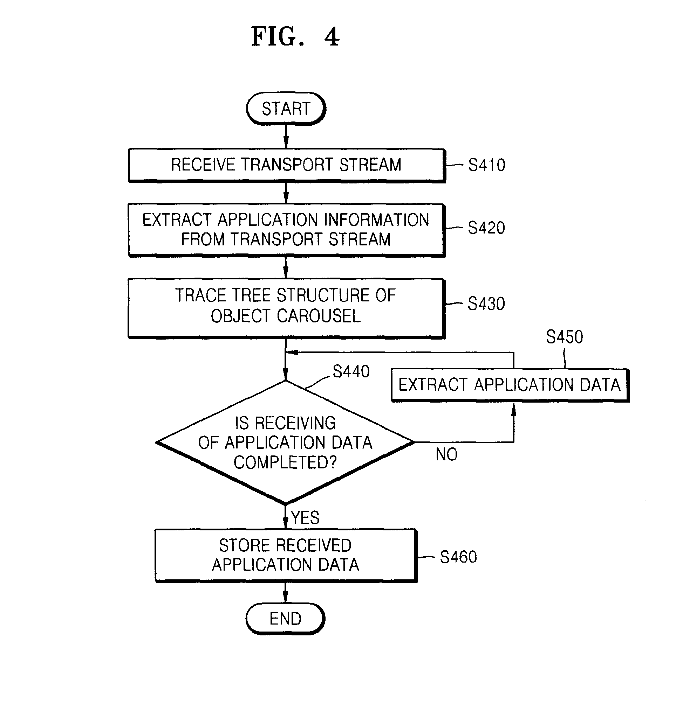

Figure 4 is a flowchart illustrating a method of determining whether receiving of an application is completed. Referring to Figure 4, a transport stream (TS) is received (operation s410). The received TS contains service information (SI). In general, SI contains a program association table (PAT), a program map table (PMT), an application information table (AIT), and so on.

Information indicating whether an application is included, that is, application information, is extracted from the AIT (operation s420). If an application is included, filtering is performed on an object carousel containing a service gateway (SGW) of the application.

An object carousel tree is traced (operation s430). That is, as illustrated in Figure 3A, information regarding an IOR of the SGW is extracted using a DSI (operation s430). It is possible to search the information regarding the IOR of the SGW for a service gateway object and a lower object IOR. The object IOR may be a directory object or a file object.

If the object IOR is a first object, a corresponding file object is searched for, and the obtained file object is stored. If the object IOR is a directory object, a corresponding directory object is searched for, and then, a directory object or a file object is searched for. In this way, it is possible to determine whether a necessary object is present by using an object carousel tree, and to store an object obtained by the searching.

If all objects for executing the application, i.e., the application data, are completely received (operation s440), the received application is stored (operation s460). Otherwise, necessary application data are continuously extracted (operation s450).

If not all of the objects are collected before storing of the data broadcast ends, it is determined that not all of the necessary application data has been received. In this case, the application will not be executed when the data broadcast is later reproduced.

Also, if storing of the data broadcast ends while operations 440 and 450 are being repeatedly performed, it is determined that receiving of the application data is not completed, and thus, the application will not be executed later.

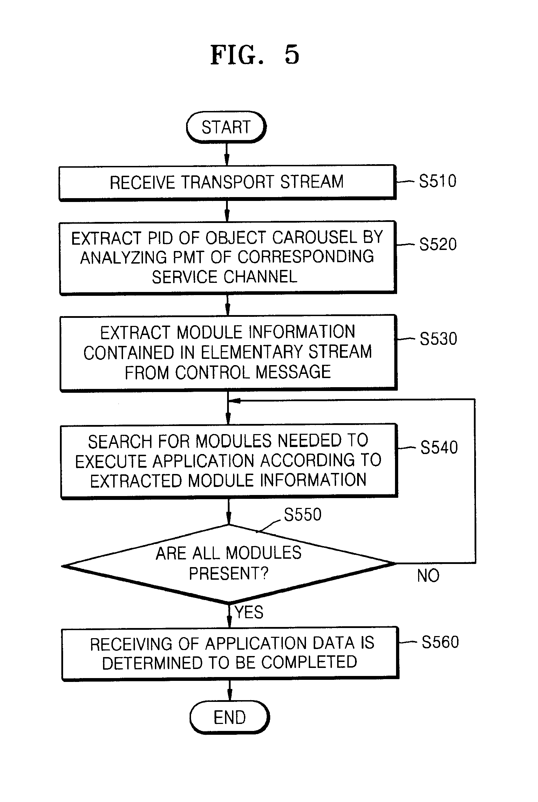

Figure 5 is a flowchart illustrating an alternative method of determining whether reception of an application is completed. In the method illustrated in Figure 5, it is determined whether receiving of modules each containing an object is completed, unlike in the method illustrated in Figure 4, which determines whether receiving of objects is completed.

Referring to Figure 5, a transport stream (TS) containing service information (SI) is received (operation s510). A PMT of a corresponding service channel included in the SI is analyzed, and packet identification (PID) of an object carousel for an elementary stream (ES) containing an object carousel, and other information are extracted (operation s520).

Module collection information of a data carousel contained in an ES of each object carousel is extracted by extracting a control message (operation s530). The control message indicates the location of a corresponding object, and in particular, the control message is download information identifications (DIIs).

Modules needed to execute an application are searched for according to the extracted module collection information (operation s540). When all the modules are searched for until storing of a data broadcast ends (operation s550), it is determined that receiving of the application data is completed (operation s560). Operations 520 through 550 are performed on an ES of each of the object carousels described in the same PMT.

Similarly in the method of Figure 4, if not all of the modules are collected before storing of a data broadcast is completed, it is determined that not all of the required application data are received. In this case, the application will not be executed when the data broadcast is later reproduced.

Also, when storing of the data broadcast ends while operations 540 and 550 are being repeatedly performed, it is determined that receiving of the application data is not completed, and thus, the application will not be executed later.

As described above, when a data broadcast receiving apparatus receives a data broadcast, it is determined whether all application data needed to execute an application is received, and the received application data is stored. During reproduction of the data broadcast, only applications whose application data is completely received are executed together with audio/video. Thus, since a user can only execute applications that operate normally, the user is less inconvenienced, and errors in operating the data broadcast receiving apparatus during execution of the application can be prevented.

While this invention has been particularly shown and described with reference to exemplary embodiments thereof, it will be understood by those skilled in the art that various changes in form and details may be made therein without departing from the scope of the invention as defined by the appended claims.

## Claims

1. Apparatus comprising an application controller arranged to determine whether all application data needed to execute an application has been received in a data broadcast, and responsive to a positive determination to perform an action.

2. The apparatus of claim 1, wherein the action is to cause the application data to be stored, together with audio/video data, in a storage unit.

3. The apparatus of claim 1, wherein the action is to execute the application.

4. The apparatus of any preceding claim, wherein the application controller is arranged to determine whether all application data needed to execute the application has been received by searching a tree structure of an object carousel constructed from the data broadcast, and determining therefrom whether an object is received.

5. The apparatus of claim 4, wherein the tree structure of the object carousel is constructed using a service gateway as a root directory, wherein the service gateway is collected based on an interoperable object reference of a service gateway included in download server indications of the data broadcast.

6. The apparatus of any of claims 1 to 3, wherein the application controller is arranged to determine whether all application data needed to execute the application has been received by determining whether all modules described in a control message are received.

7. The apparatus of claim 6, wherein the control message is download information indications extracted from a program map table of the data broadcast.

8. The apparatus of any preceding claim, wherein the application controller is arranged, when a plurality of pieces of application data for a plurality of applications are transmitted, to determine whether receiving of application data to be executed for each of the plurality of applications is completed.

9. An apparatus for executing a data broadcast application, comprising:
a storage unit arranged to store application data needed to execute an application and received in a data broadcast, together with audio/video data;
an application controller arranged to determine whether the application is to be executed together with the audio/video data when the stored data broadcast is reproduced; and
an application executing unit arranged selectively to execute the application in response to an instruction from the application controller.

10. The apparatus of claim 3 or claim 9, wherein the application controller is arranged, when a plurality of pieces of application data for a plurality of applications are stored, to determines whether each of the applications is to be executed.

11. The apparatus of claim 3 or claim 9, wherein the application controller is arranged to disallow the application to be executed on determining that not all application data needed to execute an application have been stored.

12. The apparatus of claim 11, wherein the determining step comprises determining whether all modules described in a control message have been received.

13. The apparatus of claim 11, wherein the determining step comprises searching a tree structure of an object carousel constructed from the data broadcast and determining whether an object is received.

14. The apparatus of claim 12, wherein the control message is download information indications extracted from a program map table of the data broadcast.

15. The apparatus of claim 13, wherein the tree structure of the object carousel is constructed using a service gateway as a root directory and wherein the service gateway is collected based on an interoperable object reference of a service gateway of download server indications of the data broadcast.

16. A method of receiving and storing a data broadcast application, comprising:
determining whether all application data needed to execute an application has been received in a data broadcast; and
on a positive determination, performing an action.

17. A method of executing a data broadcast application, comprising:
storing application data needed to execute an application received in a data broadcast, together with audio/video data when ; and executing the application together with the audio/video data.

18. A computer program comprising instructions for carrying out the method of claim 16 or claim 17.
